# EUROPEAN PATENT SPECIFICATION

(11) **EP 4 119 632 B1**
(45) Date of publication and mention of the grant of the patent: **04.11.2026**
(21) Application number: 21787975.8
(22) Date of filing: 16.04.2021
(51) Int. Cl.: C09K 5/04

(54) **METHOD OF DESIGNING A REFRIGERANT**
VERFAHREN ZUR ENTWICKLUNG EINES KÄLTEMITTELS
PROCÉDÉ DE CONCEPTION D'UN RÉFRIGÉRANT

(30) Priority: 16.04.2020 JP 2020073423
(43) Date of publication of application: 18.01.2023
(73) Proprietor: Mitsubishi Heavy Industries Thermal Systems, Ltd., Tokyo, 100-8332 (JP)
(72) Inventor: KATSURAYAMA, Yohei, Tokyo 100-8332 (JP); ENYA, Atsushi, Tokyo 100-8332 (JP); KAMIYA, Kazunari, Tokyo 100-8332 (JP); MURAKAMI, Kenichi, Tokyo 100-8332 (JP)
(74) Representative: Cabinet Beau de Loménie
(86) International application number: PCT/JP2021/015668
(87) International publication number: WO 2021/210663

(56) References cited:
- WO-A1-2020/035689
- JP-A- 2011 116 822
- US-A1- 2004 084 652
- DI NICOLA G ET AL: "Blends of carbon dioxide and HFCs as working fluids for the low-temperature circuit in cascade refrigerating systems", INTERNATIONAL JOURNAL OF REFRIGERATION, ELSEVIER, AMSTERDAM, NL, vol. 28, no. 2, 1 March 2005 (2005-03-01), pages 130 - 140, XP027765598, ISSN: 0140-7007, [retrieved on 20050301]
- DOIPHODE PUSHPAK, LAKSHMANAN VIGNESH, SAMANTA INDRANEEL: "Experimental and Numerical Study of Cooling Performance of Air Conditioner Using R32/CO 2 Refrigerant Mixture", INTERNATIONAL JOURNAL OF AIR-CONDITIONING AND REFRIGERATION, vol. 27, no. 2, 1 June 2019 (2019-06-01), pages 1950019 - 1 - 1950019-8, XP009540031, ISSN: 2010-1325, DOI: 10.1142/S2010132519500196
- AKASAKA, RYO: "A210 Correlation for Vapor-Liquid Equilibrium of Refrigerant Mixtures Containing Carbon Dioxide - An Application of the Multi-fluid Model Based on Helmholtz Energy Equations of State", 30TH JAPAN SYMPOSIUM ON THERMOPHYSICAL PROPERTIES, YONEZAWA, JAPAN; OCTOBER 28-30, 2009, vol. 30, 30 November 2008 (2008-11-30) - 30 October 2009 (2009-10-30), pages 259 - 261, XP009540129

## Description

### Technical Field

The present disclosure relates to a method for designing a refrigerant.

### Background Art

As a refrigerant for a refrigeration machine that is used at a low temperature, trifluoromethane (R23) or carbon dioxide (CO₂) is used (refer to PTL 1).
WO 2020/035689 A1 discloses a refrigerant composition comprising carbon dioxide (CO2, R-744) and from 1 to 32 weight % difluoromethane (R-32) based on the total weight of the refrigerant composition.

### Citation List

### Patent Literature

[PTL 1] Japanese Unexamined Patent Application Publication No. 2017-96503
[PTL 2] Japanese Unexamined Patent Application Publication No. 2011-116822

### Summary of Invention

### Technical Problem

A refrigeration machine that uses CO₂ as a refrigerant can be operated at a low temperature that is an evaporation temperature of -45°C, for example. However, CO₂ itself may reach freezing at -56°C, and the refrigeration machine using CO₂ as a refrigerant cannot operate at -50°C or lower.

As other means for enabling use at a low temperature of -50°C or lower, a refrigeration machine using air as a refrigerant is being developed. However, using air as a refrigerant is a technique that uses sensible heat, and a unit size of a refrigeration machine becomes very large. Therefore, refrigeration machines that use air as a refrigerant have not become widespread.

In refrigeration machines that want to achieve a low temperature of -50°C or lower, in most cases, R23 is used as a refrigerant. However, R23 is a Freon-based refrigerant and has a very high global warming potential (GWP) of 14800. Therefore, the policy is to reduce the use of R23 due to environmental regulations (Kigali revision), and alternatives are urgently needed.

In PTL 1, the GWP is reduced to 1500 or lower by mixing R23 and another refrigerant (difluoroethylene: R1132a). However, from a long-term perspective, it is desirable to further reduce the GWP.

In a case where two or more types of refrigerants are mixed and used, in most cases, the mixing ratio is set based on the physical properties of a refrigerant calculated by REFPROP of the National Institute of Standards and Technology (NIST) (refer to PTL 2).

However, according to the results of diligent studies by the inventors of the present invention, it has been found that the accuracy of the physical properties of a refrigerant in a low temperature region calculated by REFPROP is not high. That is, in the refrigerant design according to the related art using REFPROP, there is a possibility that the mixing ratio of the refrigerant may be erroneous. In a case where the mixing ratio of the refrigerant that is used at a low temperature is erroneous, there is a concern that the refrigerant may freeze at a target use temperature to cause damage to the machine.

The present invention has been made in view of such circumstances, and has an object to provide a refrigerant having a GWP lower than that of R23 and capable of being used at a temperature of -50°C or lower, and a method for designing the refrigerant.

### Solution to Problem

In order to solve the above problem, a refrigerant and a method for designing the refrigerant according to the present disclosure adopt the following means.

According to the present invention as defined in claim 1, there is provided a method for designing a refrigerant that is used at a temperature of -50°C or lower, the method including: a step of mixing CO₂ and R32, wherein a weight ratio of the R32 to a sum of the CO₂ and the R32 is defined as x₁, a minimum weight ratio x₀ of the R32 is obtained by substituting a target use temperature y₀ for y in an expression, y = -56.0x - 57.0, in which a freezing temperature(°C) y is represented by a weight ratio x (x>0) of the R32 to the sum of the CO₂ and the R32, and the x₁ is set such that the x₁ is larger than the x₀. Advantageous Effects of Invention

According to the above disclosure, the freezing temperature of a refrigerant can be lowered by mixing R32 with CO₂.

According to the above disclosure, the relational expression, y = -56.0x - 57.0, is more accurate than REFPROP and reflects the freezing temperature of the refrigerant in which CO₂ and R32 are mixed. Therefore, there is a low possibility that the weight ratio of R32 may be erroneous, and a refrigerant capable of being used at a target temperature is obtained more reliably.

### Brief Description of Drawings

Fig. 1 is a diagram describing a method for designing a refrigerant according to an embodiment.
Fig. 2 is a diagram showing the results of element tests.
Fig. 3 is a diagram showing a suitable weight ratio range of R32 that is derived from the results of the element tests.
Fig. 4 is a configuration diagram of a refrigeration machine using a refrigerant according to an embodiment. Description of Embodiments

Hereinafter, an embodiment of a refrigerant and a method for designing the refrigerant according to the present disclosure will be described with reference to the drawings.

### (Refrigerant)

A refrigerant according to the present embodiment is a mixed refrigerant (hereinafter, simply referred to as a refrigerant) composed of CO₂ and R32 (difluoromethane, CH₂F₂). The refrigerant can be used at a temperature of -50°C or lower. The refrigerant may contain unavoidable impurities.

The refrigerant contains R32 at a weight ratio x₁. The x₁ is larger than the minimum weight ratio x₀ of R32 obtained in advance.

The minimum weight ratio x₀ of R32 is obtained by substituting a target use temperature y₀(°C) for y in an expression, y = -56.0x - 57.0 (x>0), in which a freezing temperature(°C) y is represented by a weight ratio x of the R32 to the sum of the CO₂ and R32 (the refrigerant weight) .

The target use temperature of the refrigerant is -50°C or lower and preferably -55°C or lower. The target use temperature of the refrigerant is -75°C or higher and preferably -70°C or higher.

### (Method for Designing Refrigerant)

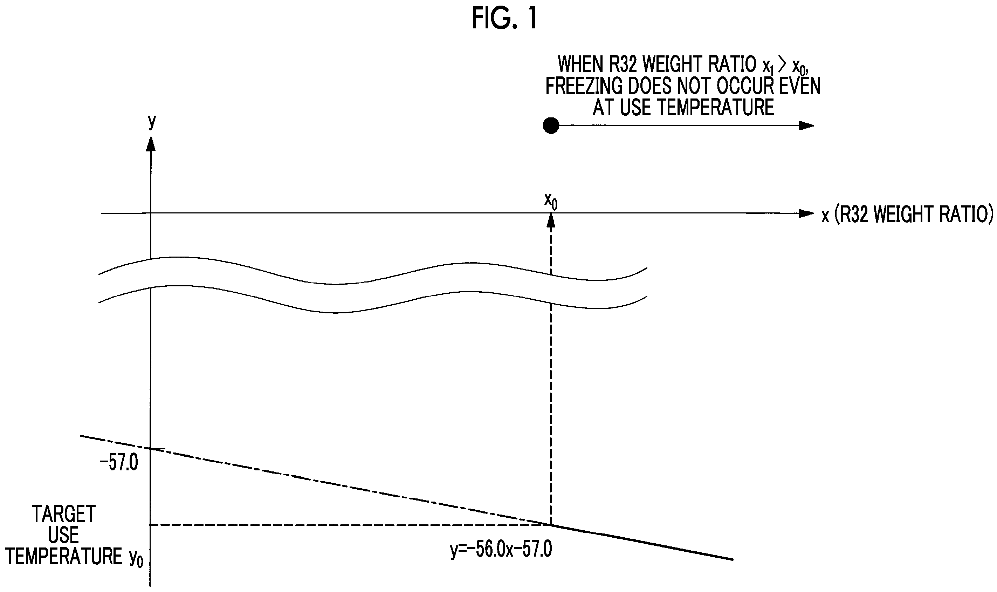

A method for designing a refrigerant according to the present embodiment will be described with reference to Fig. 1.

In Fig. 1, the vertical axis (y-axis) is the freezing temperature (°C) of the refrigerant, and the horizontal axis (x-axis) is the weight ratio of R32 to the sum of CO₂ and R32. In Fig. 1, a straight line (a dashed-dotted line and a solid line) represented by an expression (1), y = -56.0x - 57.0, is shown.

First, the target use temperature y₀ is substituted for y in the expression (1), and the calculated x is defined as x₀ (minimum weight ratio). In order to prevent the refrigerant from freezing at the target use temperature y₀, it is necessary to make the weight ratio x₁ of R32 larger than x₀. Therefore, the weight ratio x₁ of R32 is set to be larger than the minimum weight ratio x₀.

CO₂ and R32 are mixed such that the weight ratio x₁ of R32 set at the above description is obtained.

### (Element Test)

An element test was carried out on the mixed refrigerant (hereinafter, simply referred to as a refrigerant) composed of CO₂ and R32, and the freezing temperature was confirmed.

In the element test, the freezing temperature was confirmed within the weight ratio of R32 in the range of 0% to 20%.

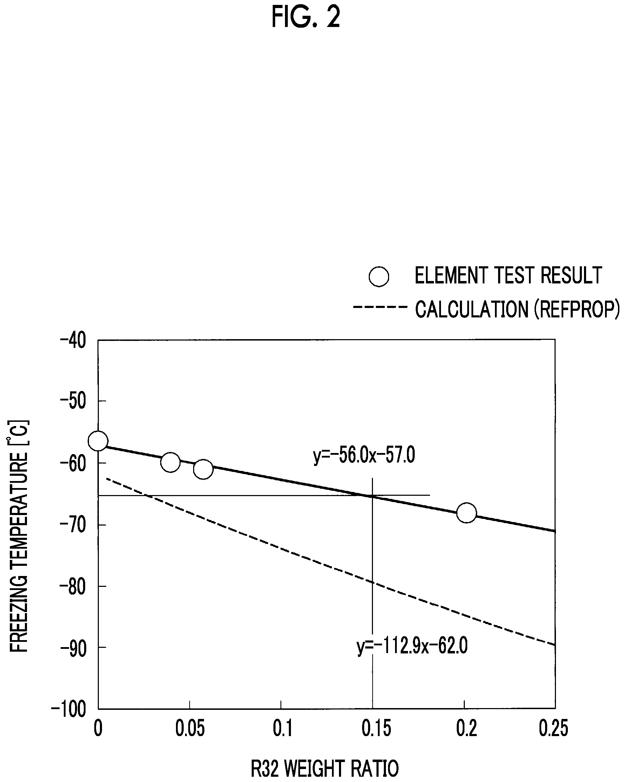

In Fig. 2, the results of the element test are shown. The drawing is a graph of an x-y coordinate system in which an x-axis and a y-axis are orthogonal to each other. In the drawing, the horizontal axis (x-axis) is the weight ratio of R32 to the sum of CO₂ and R32, the vertical axis (y-axis) is the freezing temperature (°C) of the refrigerant, o is a plot of the element test result, and a solid line is a linear approximation curve (approximate expression: y = -56.0x - 57.0) based on the element test results.

In Fig. 2, for reference, the physical properties of a refrigerant calculated by REFPROP of the National Institute of Standards and Technology (NIST) is also shown (a broken line: y = -112.9x - 62.0). According to Fig. 2, it is confirmed that there is an error between the result of the element test and the physical properties of a refrigerant calculated by REFPROP.

For example, in the case of the refrigerant in which the weight ratio of R32 is 0.03, the result that the freezing temperature is about -65°C is obtained based on the calculation of REFPROP. However, according to the element test, it can be seen that the refrigerant freezes at about -60°C.

For example, in the case of the refrigerant in which the weight ratio of R32 of 0.2, the result that the freezing temperature is about -84.5°C is obtained based on the calculation of REFPROP. However, according to the element test, it can be seen that the refrigerant freezes at about -68°C. The error of the freezing temperature is 15°C or higher.

From the above results, it is confirmed that with respect to at least the refrigerant that includes CO₂ and R32, the calculation result by REFPROP does not reflect an exact freezing temperature.

In REFPROP, the physical properties of a refrigerant are calculated based on the Helmholtz state equation. The Helmholtz state equation requires internal parameters such as saturation density, saturated vapor pressure, and sound speed of a refrigerant. In order to accurately derive the numerical values of these parameters in the refrigerant, there is no choice but to actually measure them. However, since there is little need for refrigerants that are used at a low temperature, actual measurement is not performed at a current state. That is, in REFPROP, the physical properties of a refrigerant in a low temperature region (-50°C or lower) are simulated by extrapolation, based on data in other temperature regions. Therefore, it is considered that an error occurs with respect to the actual physical properties of a refrigerant.

The straight line represented by y = -56.0x - 57.0 is a freezing temperature line obtained based on the element test results. Therefore, the weight ratio of R32 is set with this straight line as a reference, so that a refrigerant that does not freeze at the use temperature can be designed more reliably.

The weight ratio of R32 is set in the region on the right side (the side where the weight ratio becomes large) of the straight line represented by y = -56.0x - 57.0, so that a refrigerant that does not freeze at the freezing temperature (y) is obtained. The region on the right side of the above straight line is namely a region where the slope of the straight line is larger than -56.0. In this way, it becomes possible to use the refrigerant that includes CO₂ and R32 at a temperature of -50°C or lower.

The freezing temperature (y) of the refrigerant is preferably lower by a temperature of 5°C or higher than the target use temperature. For example, in a case where the target use temperature is -60°C, the refrigerant is designed such that the freezing temperature of the refrigerant is about -65°C. According to Fig. 2, in order to make the freezing temperature of the refrigerant a temperature of -65°C or lower, it is necessary to set the weight ratio of R32 to at least 0.143 or more.

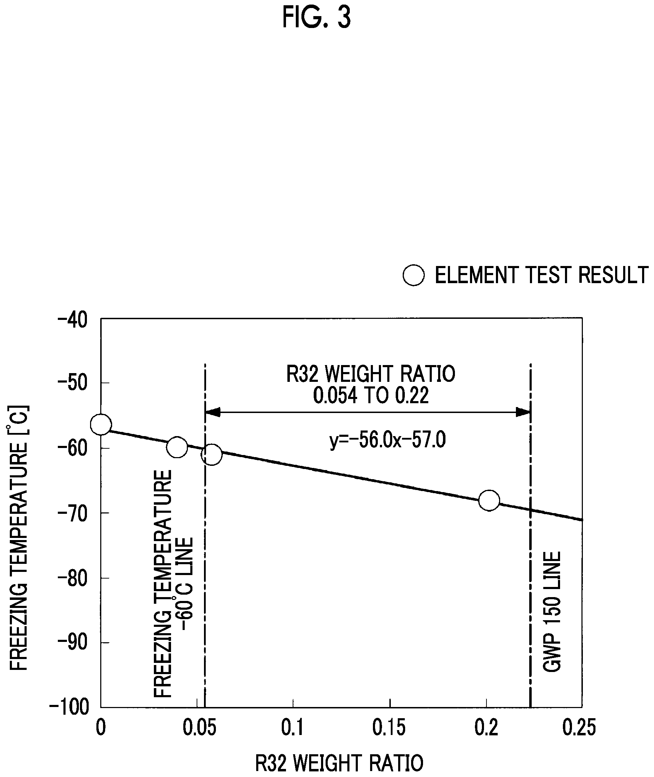

In Fig. 3, a suitable weight ratio range of R32 that is derived from the results of the element test is shown. In this drawing, the horizontal axis (x-axis) is the weight ratio of R32 to the sum of CO₂ and R32, the vertical axis (y-axis) is the freezing temperature (°C) of the refrigerant, o is a plot of the element test result, and a solid line is a linear approximation curve (approximate expression: y = -56.0x - 57.0) based on the plots of the element test results.

When the weight ratio of R32 is 0.054 (5.4 wt%) or more, the refrigerant having a freezing temperature of -60°C or lower is obtained. When the weight ratio of R32 is 0.22 (22 wt%) or less, the refrigerant having the GWP of 150 or lower is obtained.

For example, in a case where the total weight of the refrigerant (the sum of CO₂ and R32) is 100 g, by mixing R32 at a ratio in the range of 5.4 g to 22 g, the refrigerant capable of being used at a temperature of -55°C or lower and having the GWP of 150 or lower is obtained. Such a refrigerant can be expected to be used for a long period of time because it can comply with future environmental regulations.

According to the General High Pressure Gas Safety Act established by the Ministry of Economy, Trade and Industry of Japan, in a case where the weight ratio of R32 is 73 wt% or more, it is considered to be flammable. A refrigerant in which CO₂ and R32 are mixed in the above range has a lower explosive limit of 72% or more and becomes a non-combustible refrigerant. Therefore, from the viewpoint of safety, the refrigerant is easily applied.

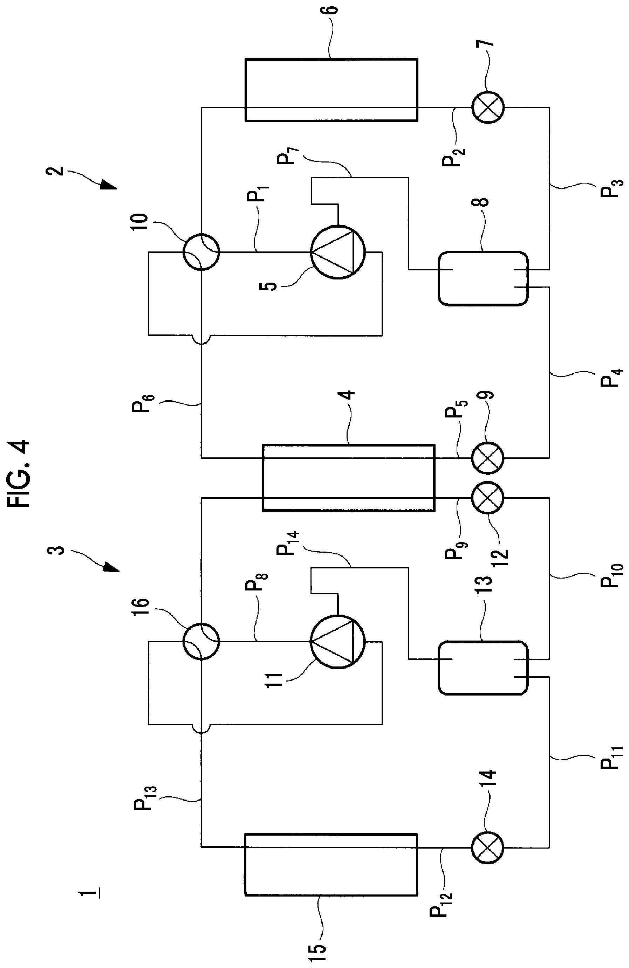

In Fig 4, the configuration of a refrigeration machine using the refrigerant according to the present embodiment is shown. A refrigeration machine 1 of Fig. 4 includes a high temperature-side refrigerating cycle 2 and a low temperature-side refrigerating cycle 3. The high temperature-side refrigerating cycle 2 and the low temperature-side refrigerating cycle 3 are thermally connected to each other by a cascade heat exchanger 4.

A refrigerant can be circulated independently in each of the high temperature-side refrigerating cycle 2 and the low temperature-side refrigerating cycle 3. The high temperature-side refrigerating cycle 2 is filled with CO₂ as a refrigerant. The low temperature-side refrigerating cycle 3 is filled with a refrigerant composed of CO₂ and R32 according to the present embodiment as a refrigerant.

The high temperature-side refrigerating cycle 2 includes a first compressor 5, a condenser 6, a first sub-expansion valve 7, a first gas-liquid separator (receiver) 8, a first main expansion valve 9, and the cascade heat exchanger 4, and these configurations are sequentially connected by pipes P₁ to P₆. A first four-way valve 10 is provided in the pipe P₁ connecting the first compressor 5 and the condenser 6 and the pipe P₆ connecting the cascade heat exchanger 4 and the first compressor 5. The first gas-liquid separator 8 and the first compressor 5 are connected by a pipe P₇ that leads the gas separated by the first gas-liquid separator 8 to the first compressor 5.

The low temperature-side refrigerating cycle 3 includes a second compressor 11, the cascade heat exchanger 4, a second sub-expansion valve 12, a second gas-liquid separator (receiver) 13, a second main expansion valve 14, and an evaporator 15, and these configurations are sequentially connected by pipes P₈ to P₁₃. A second four-way valve 16 is provided in the pipe P₈ connecting the second compressor 11 and the cascade heat exchanger 4 and the pipe P₁₃ connecting the evaporator 15 and the second compressor 11. The second gas-liquid separator 13 and the second compressor 11 are connected by a pipe P₁₄ that leads the gas separated by the second gas-liquid separator 13 to the second compressor 11.

The refrigeration machine 1 shown in Fig. 4 can be used even at a temperature of -50°C or lower by filling the low temperature-side refrigerating cycle 3 with the refrigerant designed by the method according to the present embodiment.

Each of the first gas-liquid separator 8 and the second gas-liquid separator 13 may be replaced with an economizer heat exchanger (not shown). In a gas-liquid separation mode, the separated gas is injected into the compressor, so that the amount of cooling becomes small. On the other hand, in the economizer heat exchanger, the dryness of the refrigerant that is injected into the compressor can be reduced to less than 1 (two-phase refrigerant including liquid and gas) by adjusting the amount of heat exchange. In this way, the amount of cooling can be increased, and the discharge temperatures of the first compressor 5 and the second compressor 11 can be further lowered.

### <Additional Remark>

The refrigerant and the method for designing the refrigerant described in the embodiment described above and the refrigeration machine filled with the refrigerant are grasped as follows, for example.

The refrigerant according to the present disclosure is a refrigerant that is used at a temperature of -50°C or lower and includes CO₂ and R32, in which the R32 is contained at a weight ratio x₁ to the sum of the CO₂ and the R32, the x₁ is larger than the minimum weight ratio x₀ of the R32, and the x₀ is a value obtained by substituting the target use temperature y₀(°C) for y in the expression, y = -56.0x - 57.0, in which the freezing temperature(°C) y is represented by the weight ratio x of the R32 to the sum of the CO₂ and the R32.

The method for designing a refrigerant according to the present disclosure is a method for designing a refrigerant that is used at a temperature of -50°C or lower, the method including a step of mixing CO₂ and R32, in which the weight ratio of the R32 to the sum of the CO₂ and the R32 is defined as x₁, the minimum weight ratio x₀ of the R32 is obtained by substituting the target use temperature y₀ for y in the expression, y = -56.0x - 57.0, in which the freezing temperature(°C) y is represented by the weight ratio x (x>0) of the R32 to the sum of the CO₂ and the R32, and the x₁ is set such that the x₁ is larger than the x₀.

The refrigerant according to the above disclosure is a mixed refrigerant composed of CO₂ and R32. By mixing R32 with CO₂, the freezing temperature of the refrigerant can be lowered.

The above expression is a relational expression derived based on the result of actually measuring the freezing temperature of the mixed refrigerant of CO₂ and R32. Therefore, the freezing temperature of the refrigerant satisfying this relational expression is more accurate than the physical properties of a refrigerant obtained by the calculation of REFPROP. Therefore, there is a low possibility that the weight ratio of R32 may be erroneous, and the refrigerant that can be used at a temperature of -50°C or lower is obtained more reliably.

In the above disclosure, the target use temperature of the refrigerant is -50°C or lower and preferably -55°C or lower. Further, the target use temperature of the refrigerant is -75°C or higher and preferably -70°C or higher.

In an aspect of the above disclosure, it is desirable that x is 0.054 or more and 0.22 or less.

The weight ratio (x) of R32 is set to be 0.054 or more, so that the freezing temperature of the refrigerant becomes -60°C or lower. Such a refrigerant enables use at a temperature of -55°C or lower, which is not feasible at a single refrigerant of only CO₂.

The GWP of CO₂ is 1. The GWP of R32 is 675. The weight ratio (x) of R32 is set to be 0.22 or less, so that a refrigerant having the GWP of 150 or lower is obtained.

### Reference Signs List

1: refrigeration machine
2: high temperature-side refrigerating cycle
3: low temperature-side refrigerating cycle
4: cascade heat exchanger
5: first compressor
6: condenser
7: first sub-expansion valve
8: first gas-liquid separator
9: first main expansion valve
10: first four-way valve
11: second compressor
12: second sub-expansion valve
13: second gas-liquid separator
14: second main expansion valve
15: evaporator
16: second four-way valve

## Claims

1. A method for designing a refrigerant that is used at a temperature of -50°C or lower, the method comprising:
a step of mixing CO₂ and R32,
wherein a weight ratio of the R32 to a sum of the CO₂ and the R32 is defined as x₁,
a minimum weight ratio x₀ of the R32 is obtained by substituting a target use temperature y₀ for y in an expression, y = -56.0x - 57.0, in which a freezing temperature(°C) y is represented by a weight ratio x (x>0) of the R32 to the sum of the CO₂ and the R32, and
the x₁ is set such that the x₁ is larger than the x₀.

## Patentansprüche

1. Verfahren zum Entwickeln eines Kühlmittels, das bei einer Temperatur von -50°C oder niedriger verwendet wird, wobei das Verfahren umfasst:
einen Schritt eines Mischens von CO₂ und R32,
wobei ein Gewichtsverhältnis des R32 zu einer Summe des CO₂ und des R32 als x₁ definiert ist,
ein minimales Gewichtsverhältnis x₀ des R32 durch Substituieren einer Sollgebrauchstemperatur y₀ durch y in einer Gleichung erhalten wird, y = -56,0x - 57,0, in der eine Gefriertemperatur (°C) y durch ein Gewichtsverhältnis x (x > 0) des R32 zu der Summe des CO₂ und des R32 dargestellt wird, und
das x₁ eingestellt wird, so dass das x₁ größer als das x₀ ist.

## Revendications

1. Procédé pour concevoir un réfrigérant qui est utilisé à une température de -50 °C ou moins, le procédé comprenant :
une étape de mélange de CO₂ et de R32,
dans lequel le rapport en poids du R32 à la somme du CO₂ et du R32 est défini par x₁,
la proportion en poids minimale x₀ du R32 est obtenue par remplacement de y par la température d'utilisation visée y₀ dans l'expression y = -56,0x - 57,0, dans laquelle la température de fusion (°C), y, est représentée par le rapport en poids, x (x > 0), du R32 à la somme du CO₂ et du R32, et
x₁ est établi de façon que x₁ soit supérieur à x₀.
